# EUROPEAN PATENT APPLICATION

(11) **EP 3 493 647 A1**
(43) Date of publication of application: **05.06.2019**
(21) Application number: 17208989.8
(22) Date of filing: 20.12.2017
(51) Int. Cl.: H04W 88/08

(54) **MULTI-CELL COORDINATION SYSTEM AND METHOD**

(30) Priority: 01.12.2017 TW 106142129
(71) Applicant: Industrial Technology Research Institute, Chutung, Hsinchu 31040 (TW)
(72) Inventor: Chang, Sheng-Bang, Chiayi City 600 (TW); Liu, Chun-Nan, Taichung City 434 (TW); Hsu, Jen-Yuan, Jincheng Township Kinmen County 893 (TW)
(74) Representative: Michalski Hüttermann & Partner Patentanwälte mbB

(57) **Abstract**

A multi-cell coordination system and method are provided in the disclosure. The multi-cell coordination system includes a plurality of Radio Frequency Nodes (RFNs) and a Baseband Processing Node (BPN). Each of the RFNs includes a baseband circuit, a radio frequency (RF) circuit, and a plurality of transmission ports. The RF circuit is electrically connected to the baseband circuit and to one or more antennas. The transmission ports of each RFN are configured to transmit data to the other RFNs and to receive data provided by the other RFNs. The BPN centralizes and performs layer 2 and layer 3 functions of each cell.

## Description

### TECHNICAL FIELD

The disclosure generally relates to a multi-cell coordination system and method.

### BACKGROUND

In an ultra-dense network (UDN), base stations are built densely to enhance the capacity and the range of coverage of the systems. However, base stations that are built densely may interfere with each other, and as a result, the performance of the system may be compromised. Therefore, multi-cell coordination (MCC) may be applied to the UDN to reduce the interference between the base stations using a joint transmission method.

A cloud radio access network (C-RAN) is a base station structure based on cloud technology. In a C-RAN, in one scheme for centralizing the computations of the baseband process, each of the base stations may be divided into a remote radio head (RRH) and a baseband unit (BBU), and the BBUs may be centralized to form a BBU pool, wherein the interface between the RRH and BBU is indicated as Fronthaul which needs a larger bandwidth to support the desired data transmission rate. Because the baseband process needs to be performed on the transmitted data in the base station, and because the quantity of data may increase when the data is transmitted close to the RRH, the functional split method is introduced to the C-RAN, i.e. the bandwidth requirement between the BBU and RRH is reduced by changing the concentrated intensity of the computations of the baseband process in the C-RAN. For example, the PHY of the BBU is moved to the RRH to make the interface between the BBU and the RRH become a MAC-PHY interface. The MAC-PHY split method has been widely adopted for use as the current functional split method for a C-RAN. In the MAC-PHY split structure, the BBU in which the PHY function is removed from it is indicated as the baseband processing node (BPN), and the RRH in which the PHY function is added is indicated as the radio frequency node (RFN).

When the joint transmission (or multi-user MIMO (MU-MIMO) transmission) is performed in a C-RAN with a MAC-PHY split structure, each of the RFNs needs data for all the users. However, in the MAC-PHY split structure, the computation capability of each RFN is limited, and the number of users that each RFN can support is limited. Therefore, how to reduce the computations of the RFN in the multi-cell coordination system when the MU-MIMO transmission is performed is a subject worthy of discussion.

### BRIEF SUMMARY

A multi-cell coordination system and method are provided to overcome the problems described above.

An embodiment in accordance with the disclosure provides a multi-cell coordination system. The multi-cell coordination system comprises a plurality of radio frequency nodes (RFNs) and a baseband processing node (BPN). Each of the plurality of RFNs comprises a baseband circuit, a radio frequency (RF) circuit and a plurality of transmission ports. The RF circuit is electrically connected to the baseband circuit. The plurality of transmission ports are configured in the RF circuit and configured to transmit data to other RFNs of the plurality of RFNs and receive data provided by the other RFNs of the plurality of RFNs. The BPN centralizes and performs layer 2 and layer 3 functions of each cell.

An embodiment in accordance with the disclosure provides a multi-cell coordination method. The multi-cell coordination method comprises the steps of assigning data of a plurality of users to a plurality of radio frequency nodes (RFNs); processing, by each of the plurality of RFNs, the assigned data to generate a first data and a third data corresponding to each of the plurality of RFNs; and transmitting first data to other RFNs of the plurality of RFNs and receiving a second data provided by the other RFNs by a plurality of transmission ports of each of the plurality of RFNs.

The foregoing will become better understood from a careful reading of a detailed description provided herein below with appropriate reference to the accompanying drawings.

### BRIEF DESCRIPTION OF THE DRAWINGS

The disclosure will become more fully understood by referring to the following detailed description with reference to the accompanying drawings, wherein:
FIG. 1 is a block diagram of a multi-cell coordination system 100 according to an embodiment of the disclosure;
FIG. 2 is a schematic diagram of a multi-cell coordination system 200 according to an embodiment of the disclosure;
FIG. 3 is a schematic diagram of a process for the computations of the precoding data W₁∼W₈ according to an embodiment of the disclosure;
FIG. 4 is a schematic diagram of a multi-cell coordination system 400 according to another embodiment of the disclosure;
FIG. 5A is a schematic diagram of a multi-cell coordination system 500 according to another embodiment of the disclosure;
FIG. 5B is a schematic diagram of a process for the computations of the time-domain baseband signals w₁∼w₈ according to an embodiment of the disclosure;
FIG. 6 is a schematic diagram of a multi-cell coordination system 600 according to another embodiment of the disclosure;
FIG. 7 is a schematic diagram of a multi-cell coordination system 700 according to another embodiment of the disclosure;
FIG. 8A is a schematic diagram of a multi-cell coordination system 800 according to another embodiment of the disclosure;
FIG. 8B is a schematic diagram of a process for the computations of the precoding data W₁∼W₈ according to another embodiment of the disclosure;
FIG. 9 is a schematic diagram of a multi-cell coordination system 900 according to another embodiment of the disclosure;
FIG. 10 is a schematic diagram of a process for the computations of the precoding data W₁∼W₈ according to another embodiment of the disclosure;
FIG. 11 is a flowchart 1100 illustrating a multi-cell coordination method according to an embodiment of the disclosure.

### DESCRIPTION OF THE EMBODIMENTS

The descriptions of the disclosure are some embodiments for the purpose of illustrating the general principles of the disclosure and should not be configured to limit the disclosure. The scope of the invention is determined by reference to the appended claims.

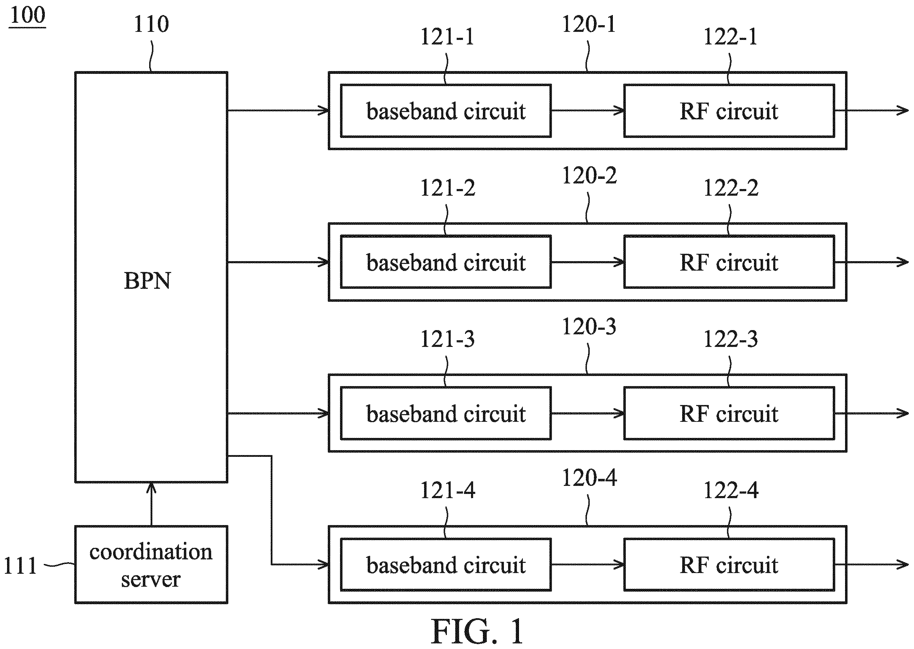

FIG. 1 is a block diagram of a multi-cell coordination system 100 according to an embodiment of the disclosure. The multi-cell coordination system 100 may be applied in a cloud radio access network (C-RAN) structure, e.g. a C-RAN with the MAC-PHY split structure (mid-haul structure), but the disclosure is not limited thereto. As shown in FIG. 1, the multi-cell coordination system 100 may include a baseband processing node (BPN) 110 (i.e. computing center for processing the layer 2 and layer 3 (L2/L3) computations of the base station), a coordination server 111, and a plurality of radio frequency nodes (RFNs) 120-1-120-4. Each of the RFNs may respectively include the baseband circuits 121-1∼121-4 and radio-frequency (RF) circuits 122-1-122-4. FIG. 1 presents a simplified block diagram in which only the elements relevant to the disclosure are shown. However, the disclosure is not limited to what is shown in FIG. 1. The multi-cell coordination system 100 may comprise other elements. In addition, there are 4 RFNs shown in FIG. 1, but the disclosure is not limited thereto. In some embodiments, the multi-cell coordination system 100 may comprise different number of RFNs. Furthermore, according to an embodiment of the disclosure, the RFN may be a small cell, but the disclosure is not limited thereto.

According to an embodiment of the disclosure, each of the RFNs 120-1∼120-4 is operated in a time-division duplexing mode, but the disclosure is not limited thereto.

According to an embodiment of the disclosure, each of the baseband circuits 121-1-121-4 functions as a physical layer (layer 1, L1) circuit, and each of the RF circuits 122-1-122-4 may be electrically connected to one or more antennas. According to the embodiments of the disclosure, each of the RFNs may comprise a plurality of the transmission ports. The transmission ports may comprise a first transmission port and second transmission port. Details will be illustrated in some embodiments below.

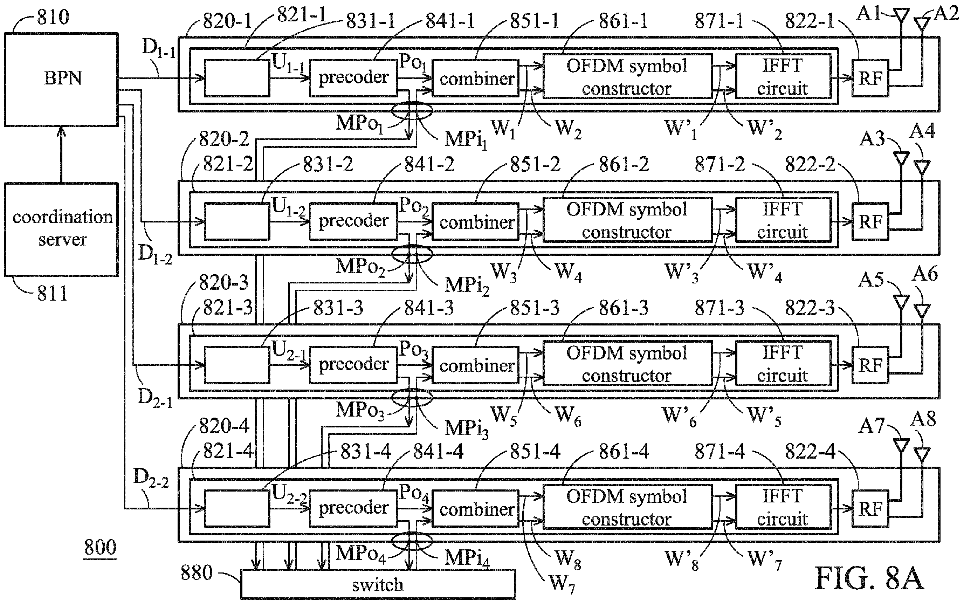

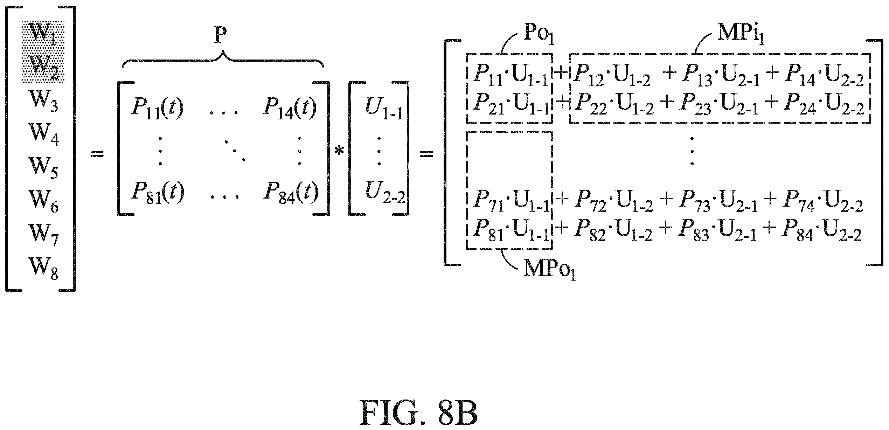

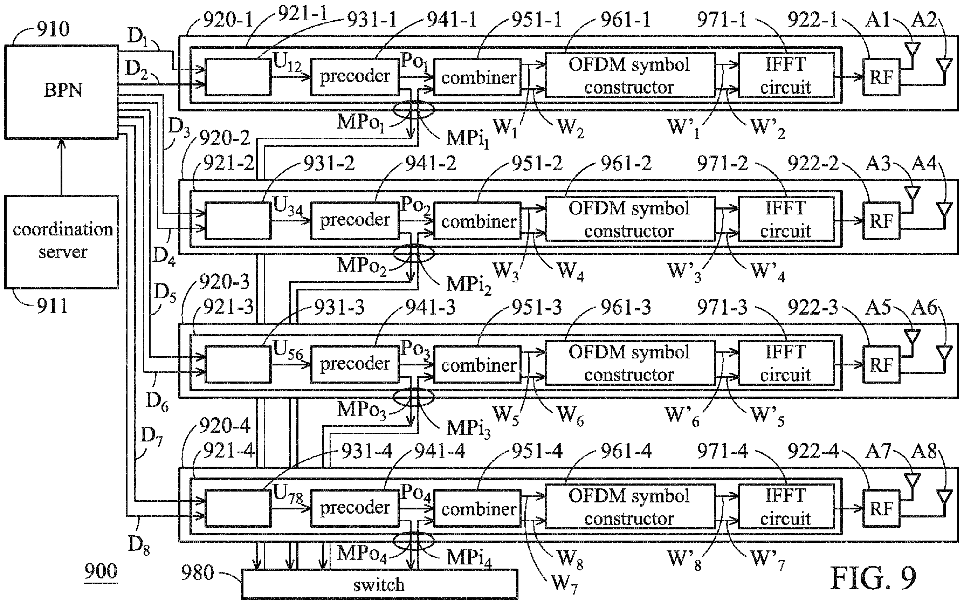

According to an embodiment of the disclosure, the coordination server 111 may indicate the BPN 110 to assign the data of the users to the RFNs 120-1-120-4 respectively. According to an embodiment of the disclosure, the coordination server 111 may be independently configured outside of the BPN 110 (as shown in FIG. 1). In another embodiment of the disclosure, the coordination server 111 may be configured in the BPN 110. According to an embodiment of the disclosure, the coordination server 111 may assign the data of a plurality of users to each of the RFNs 120-1∼120-4 respectively (e.g. the coordination server 211 shown in FIG. 1). In another embodiment of the disclosure, the coordination server 111 may assign the data of a user to more of the RFNs 120-1∼120-4 (e.g. the coordination server 811 shown in FIG. 8). In another embodiment of the disclosure, the coordination server 111 may assign the data of a plurality of users to one of the RFNs 120-1-120-4 (e.g. the coordination server 911 shown in FIG. 9).

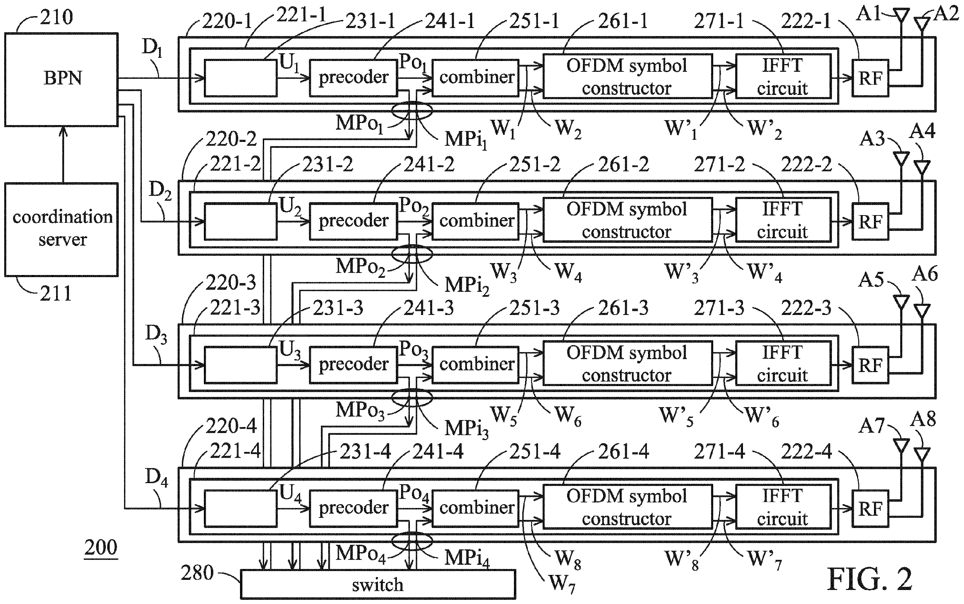

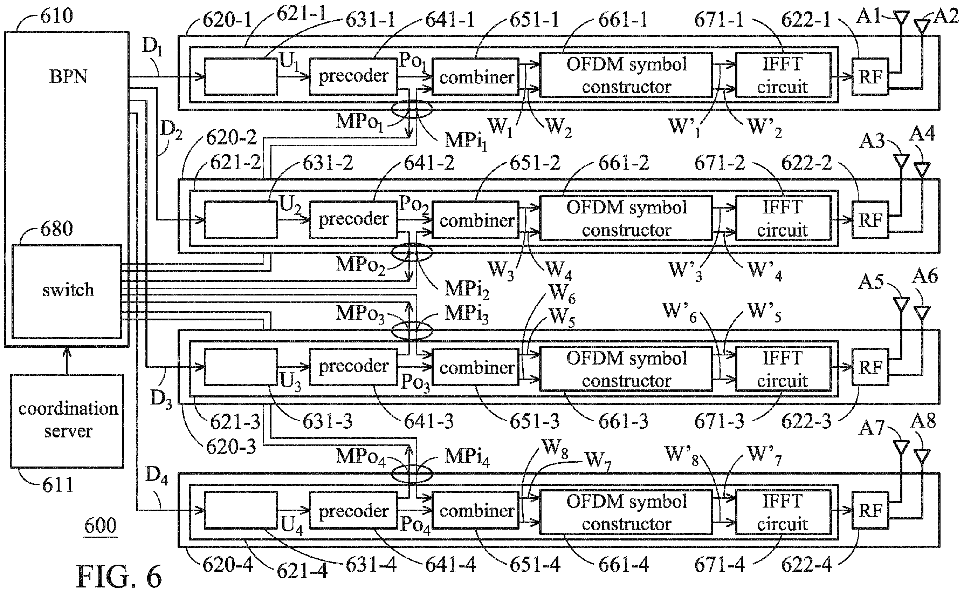

According to an embodiment of the disclosure, the multi-cell coordination system 100 may further comprises a switch (e.g. the switch 280 shown in FIG. 2 and the switch 680 shown in FIG. 6). Each of the RFNs 120-1-120-4 may transmit the data which other RFNs need from its first transmission port to the switch. And each of the RFNs 120-1-120-4 may receive the data provided by other RFNs from its second transmission port, wherein the data provided by other RFNs is transmitted through the switch. For example, the RFN 120-1 may transmit the data which other RFNs 120-2-120-4 need from its first transmission port to the switch, and the RFN 120-1 may receive the data provided by other RFNs 120-2-120-4 from its second transmission port, wherein the data provided by other RFNs 120-2-120-4 is transmitted through the switch to the RFN 120-1. Furthermore, According to an embodiment of the disclosure, the switch may be configured in the RFN-end of the C-RAN (e.g. configured in the RFN) or configured in the BPN-end of the C-RAN (e.g. configured in the BPN). In another embodiment of the disclosure, the switch may be configured outside of the RFN and BPN. According to an embodiment of the disclosure, the switch may be a high-speed switch, e.g. a 10-gigabit Ethernet (10GbE) switch.

FIG. 2 is a schematic diagram of a multi-cell coordination system 200 according to an embodiment of the disclosure. As shown in FIG. 2, the multi-cell coordination system 200 includes a BPN (performs L2/L3 of the base station) 210, a coordination server 211, a plurality of RFNs 220-1∼220-4 and a switch 280. The baseband circuits 221-1-221-4 of the RFNs 220-1-220-4 may respectively comprise the channel coding circuits 231-1-231-4, precoders (or beamformers) 241-1-241-4, combiner 251-1-251-4, orthogonal frequency-division multiplexing (OFDM) symbol constructor 261-1∼261-4 and inverse Fast Fourier Transform (IFFT) circuits 271-1-271-4. In addition, in the embodiment, the transmission ports (the first transmission ports MPo₁∼MPo₄ and the second transmission ports MPi₁∼MPi₄) of the baseband circuits 221-1-221-4 are respectively configured between the precoders 241-1-241-4 and the combiner 251-1-251-4. In the embodiment, each of the RF circuits 222-1-222-4 of the RFNs 220-1∼220-4 is electrically connected to two antennas (i.e. A1∼A8), e.g. the structure shown in FIGs. 2, 4, 5A, 6 or 8A, but the disclosure is not limited thereto. In some embodiments of the disclosure, the antennas may be configured (integrated) in the RFN, e.g. the structure shown in FIG. 9. In some embodiments of the disclosure, the RF circuit may be electrically connected to a different number of antennas. Furthermore, in the embodiment, the switch 280 is configured outside of the BPN 210 and the RFNs 220-1-220-4, but the disclosure is not limited thereto. In some embodiments of the disclosure, the switch 280 may configured in the BPN 210 or in one of the RFNs 220-1∼220-4.

In the embodiment of FIG. 2, the coordination server 211 may indicate the BPN 210 to respectively assign the data D1∼D4 of the User 1-4 to the RFNs 220-1-220-4. After the assigned data D1∼D4 of the User 1-4 are respectively processed by the channel coding circuits 231-1-231-4, the channel coding data U1∼U4 are generated. After the channel coding data U1∼U4 are respectively processed by the precoders 241-1-241-4, each of the precoders 241-1-241-4 may generate first precoding data (i.e. the first data) and then transmit the first precoding data from the first transmission ports MPo₁∼MPo₄ to the switch 280 to provide the first precoding data to other RFNs. And each of the precoders 241-1∼241-4 may further generate third precoding data (i.e. the third data) and provide the third precoding data to the combiner 251-1-251-4 at the next stage from its output-ends Po₁∼Po₄. For example, after the precoder 241-1 received the channel coding data U1, the precoder 241-1 may provide the third precoding data to the combiner 251-1 from its output-end Po₁ and output the first precoding data to the switch 280 through the first transmission ports MPo₁ (i.e. the RFN 220-1 outputs the first precoding data through the precoder 241-1). Then, the first precoding data is transmitted to other RFNs 220-2-220-4 through the switch 280 to be the second precoding data received by the second transmission port MPi₂∼MPi₄ corresponding to the RFNs 220-2-220-4.

Each of the combiners 251-1-251-4 may respectively receive the third precoding data output by the output-ends Po₁∼Po₄ of the precoders 241-1-241-4 and receive the second precoding data (i.e. the second data) provided by other RFNs through the second transmission ports MPi₁∼MPi₄, wherein the second precoding data are transmitted from the switch 280 to the second transmission ports MPi₁∼MPi₄. For example, the combiner 251-1 may receive the third precoding data output by the output-end Po₁ of the precoders 241-1 and receive the second precoding data provided by the RFNs 220-2∼220-4 through the second transmission port MPi₁.

Each of the combiners 251-1-251-4 may combine the third precoding data output by the output-ends Po₁∼Po₄ of the precoders 241-1-241-4 with the second precoding data (provided by other RFNs) received by the second transmission ports MPi₁∼MPi₄ in frequency domain to generate combined precoding data W₁-W₈ (frequency domain signals) for the User 1-4. The combined precoding data W₁∼W₈ output from the combiners 251-1-251-4 may further be processed by the OFDM symbol constructor 261-1-261-4 to form the OFDM symbols W'₁∼W'₈ (frequency domain signals) for the IFFT circuits 271-1-271-4 at the next stage. The OFDM symbols W'₁∼W'₈ may further be processed by the IFFT circuits 271-1-271-4 and the RF circuits 222-1-222-4 to generate the RF signals which will be transmitted from the antennas A1∼A8 of the RF circuits 222-1-222-4. For example, the combiner 251-1 may combine the third precoding data output by the output-end Po₁ of the precoders 241-1 with the second precoding data (provided by other RFNs 220-2-220-4) received by the second transmission port MPi₁. The combined precoding data combined by the combiner 251-1 may be further be processed by the OFDM symbol constructor 261-1 to form the OFDM symbols W'₁ and W'₂. The OFDM symbols W'₁ and W'₂ may further be processed by the IFFT circuits 271-1 and the RF circuits 222-1 to generate the RF signals which will be transmitted from the antennas A1 and A2 of the RF circuits 222-1.

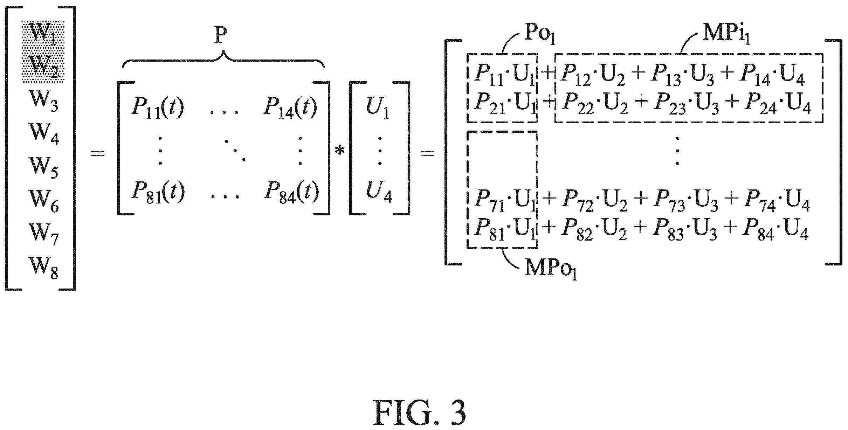

FIG. 3 is a schematic diagram of a process for the computations of the precoding data W₁∼W₈ according to an embodiment of the disclosure. Taking FIG. 2 for example, after the channel coding data U₁∼U₄ are respectively transmitted to the precoders 241-1∼241-4, the inner product computation is performed for the channel coding data U1∼U4 and a precoding matrix P to from the combined precoding data W₁∼W₈, wherein the *P*₁₁(t), *P*₁₂(t)···*P*_{MN}(t) of the precoding matrix are precoding parameters, M corresponds to the number of precoding data W (e.g. W₁∼W₈) and N corresponds to the number of channel coding data U (e.g. U₁∼U₄). In the embodiment of the disclosure, each of the RFNs 220-1∼220-4 only needs to process the data related to a user which is assigned to it. Other required data related to other users can be processed by other RFNs and each of the RFNs 220-1∼220-4 may obtain the required data related to other users from the second transmission ports MPi₁∼MPi₄. Taking FIG. 2 for example, the RFN 220-1 only needs to process the data related to the User 1 (i.e. related to the channel coding data U₁) to generate *P*ₘ₁·U₁, wherein m=1,2,···8. The third precoding data *P*₁₁·U₁ and *P*₂₁·U₁ is one part of the precoding data W₁ and W₂, and the third precoding data *P*₁₁·U₁ and *P*₂₁·U₁ is output from the output-end Po₁ of the precoder 241-1 to the combiner 251-1. Other data related to the channel coding data U₁ (i.e. the first precoding data *P*ₘ₁·U₁, wherein m=3, 4···8) may be transmitted from the first transmission port MPo₁ to the switch 280 and then transmitted to other RFNs 220-2-220-4 by the switch 280. The second precoding data *P*₁₂·U₂+*P*₁₃·U₃+*P*₁₄·U₄ which is the other part of the precoding data W₁ and W₂ is generated by other RFNs 220-2-220-4 and transmitted to the switch 280. Then, the switch 280 may transmit the second precoding data to the combiner 251-1 through second transmission port MPi₁. Therefore, the computations of the RFN 220-1 will be reduced.

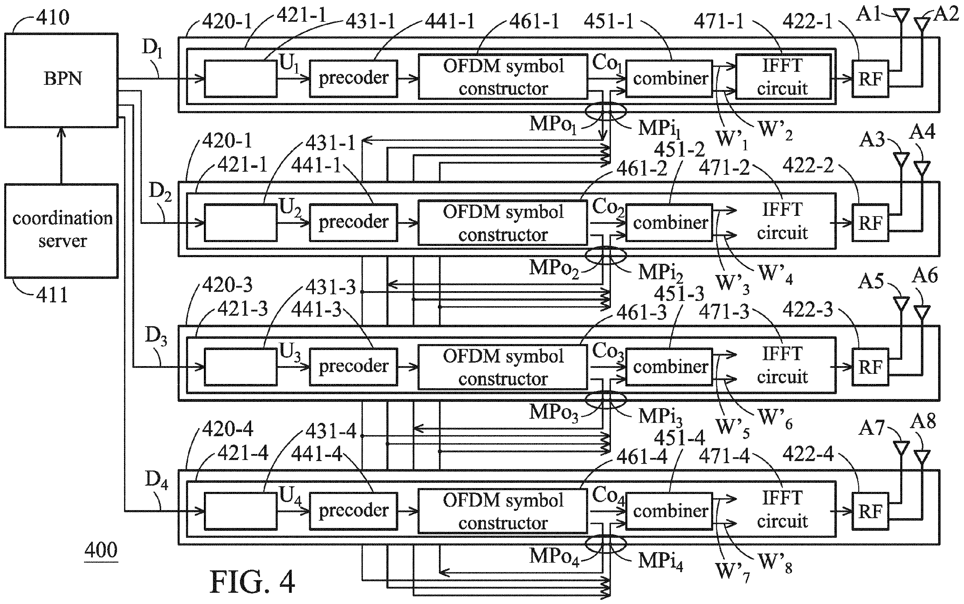

FIG. 4 is a schematic diagram of a multi-cell coordination system 400 according to another embodiment of the disclosure. As shown in FIG. 4, the multi-cell coordination system 400 includes a BPN 410, a coordination server 411, and a plurality of RFNs 420-1-420-4. The baseband circuits 421-1-421-4 of the RFNs 420-1-420-4 may respectively comprise the channel coding circuits 431-1-431-4, precoders 441-1-441-4, combiners 451-1-451-4, OFDM symbol constructors 461-1-461-4 and IFFT circuits 471-1-471-4. In the embodiment, each of the RF circuits 422-1-422-4 of the RFNs 420-1-420-4 is electrically connected to two antennas (i.e. A1∼A8).

Furthermore, as shown in FIG. 4, in the embodiment, the transmission ports (the first transmission ports MPo₁∼MPo₄ and the second transmission ports MPi₁∼MPi₄) of the baseband circuits 421-1-421-4 are respectively configured between the OFDM symbol constructors 461-1-461-4 and the combiners 451-1-451-4. Therefore, in the embodiment, after the channel coding data U1∼U4 is respectively processed by the precoders 441-1-441-4 and the OFDM symbol constructors 461-1-461-4, the OFDM symbol constructors 461-1-461-4 may generate the third OFDM symbol data (i.e. the third data) and generate the first OFDM symbol data (i.e. the first data) which is provided to other RFNs through the first transmission ports MPo₁∼MPo₄. For example, after the channel coding data U₁ is processed by the precoder 441-1 and the OFDM symbol constructor 461-1, the OFDM symbol constructor 461-1 may output the third OFDM symbol data (i.e. the data which the RFN 420-1 needs to output from its OFDM symbol constructor 461-1) to the combiner 451-1 from its output-end Co₁, and transmit the first OFDM symbol data which needs to be provided to other RFNs 420-2-420-4 through the first transmission port MPo₁. The combiner 451-1 may combine the third OFDM symbol data output by the output-end Co₁ of the OFDM symbol constructor 461-1 with the second OFDM symbol data (i.e. the second data) received by the second transmission port MPi₁ to generate combined OFDM symbol data W'₁ and W'₂, wherein the second OFDM symbol data is provided by other RFNs 420-2-420-4. Specifically, in the embodiment, the combined OFDM symbol data which generated by the combiners 451-1-451-4 is the OFDM symbol data which has been processed by the OFDM symbol constructors 461-1-461-4 and the OFDM symbol data is composed of the data (W₁∼W₈) related to the users, the synchronous signal (not shown in figures) and the reference signal (not shown in figures).

In addition, as shown in FIG.4, in the embodiment, there is not a switch configured in the multi-cell coordination system 400. That is to say, in some embodiments of the disclosure, each of the RFNs 420-1∼420-4 can directly transmit data to other RFNs which are connected to it through its first transmission port (MPo₁∼MPo₄) and receive the data provided by other RFNs through its second transmission port (MPi₁∼MPi₄), which is directly connected to the other RFNs.

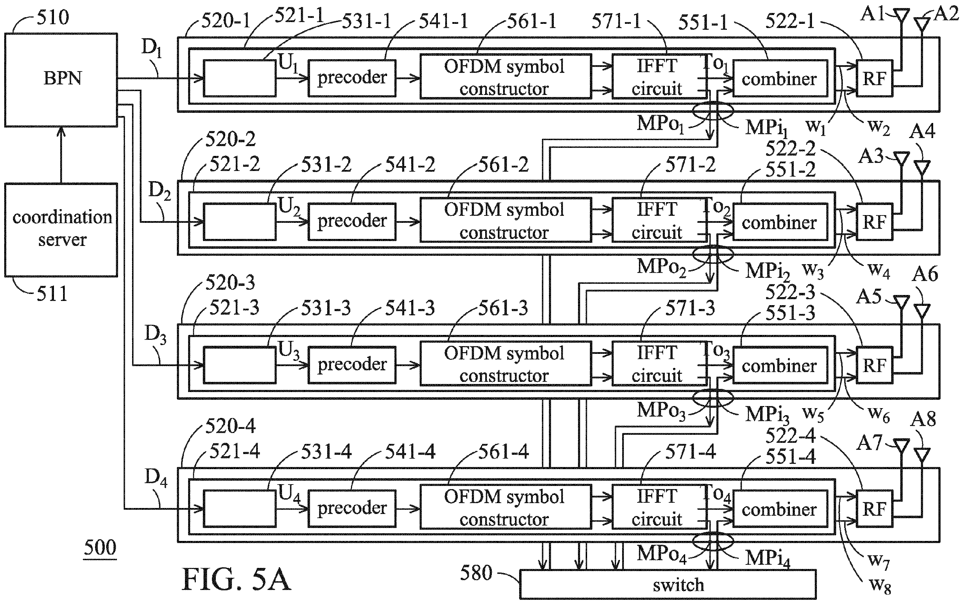

FIG. 5A is a schematic diagram of a multi-cell coordination system 500 according to another embodiment of the disclosure. As shown in FIG. 5A, the multi-cell coordination system 500 includes a BPN 510, a coordination server 511, a plurality of RFNs 520-1-520-4 and a switch 580. The baseband circuits 521-1-521-4 of the RFNs 520-1-520-4 may respectively comprise the channel coding circuits 531-1-531-4, precoders 541-1-541-4, combiners 551-1-551-4, OFDM symbol constructors 561-1-561-4 and IFFT circuits 571-1-571-4. In the embodiment, each of the RF circuits 522-1-522-4 of the RFNs 520-1-520-4 is electrically connected to two antennas (i.e. A1∼A8). Furthermore, in the embodiment, the switch 580 is independently configured outside of the BPN 510 and the RFNs 520-1-520-4.

Furthermore, as shown in FIG. 5A, in the embodiment, the transmission ports (the first transmission ports MPo₁∼MPo₄ and the second transmission ports MPi₁∼MPi₄) of the baseband circuits 521-1-521-4 are respectively configured between the IFFT circuits 571-1-571-4 and the combiners 551-1-551-4 are configured at the back of the IFFT circuits 571-1-571-4. In the embodiment, the channel coding data U₁∼U₄ is respectively processed by the precoders 541-1-541-4 and the OFDM symbol constructors 561-1-561-4 first, and then transmitted to the IFFT circuits 571-1-571-4. The combiners 551-1-551-4 may respectively receive the third IFFT data (i.e. the third data) output from the output-ends To₁∼ To₄ of the IFFT circuits 571-1-571-4 and receive the second IFFT data (i.e. the second data) through the second transmission ports MPi₁∼MPi₄, wherein the second IFFT data is provided by other RFNs and transmitted from the switch 580 to the second transmission ports MPi₁∼MPi₄. For example, the IFFT circuit 571-1 outputs the first IFFT data (i.e. the first data) which needs to be provided to other RFNs 520-2-520-4 through the first transmission port MPo₁ and then the first IFFT data is transmitted to the switch 580 and the switch 580 may provide the first IFFT data to other RFNs 520-2-520-4. The combiner 551-1 may receive the third IFFT data output from the output-end To₁ of the IFFT circuit 571-1 and receive the second IFFT data provided by other RFNs 520-2-520-4 through the second transmission port MPi₁.

In addition, in the embodiment, the combiners 551-1-551-4 may combine the third IFFT data output from the output-ends To₁∼ To₄ of the IFFT circuits 571-1-571-4 with the second IFFT data received through the second transmission ports MPi₁∼MPi₄ to generate the time-domain baseband signals w₁∼w₈, wherein the second IFFT data is provided by other RFNs. Then, the time-domain baseband signals w₁∼w₈ may be processed by the RF circuits 522-1-522-4 and transmitted to the air through the antennas A1∼A8 of the RF circuits 522-1-522-4. For example, the combiner 551-1 may (in the time domain) combine the third IFFT data output from the output-ends To₁ of the IFFT circuit 571-1 with the second IFFT data received through the second transmission port MPi₁ to generate the time-domain baseband signals w₁ and w₂, wherein the second IFFT data is provided by other RFNs 520-2-520-4. Then, the time-domain baseband signals w₁ and w₂ may be processed by the RF circuit 522-1 and transmitted to the air through the antennas A1 and A2 of the RF circuits 522-1.

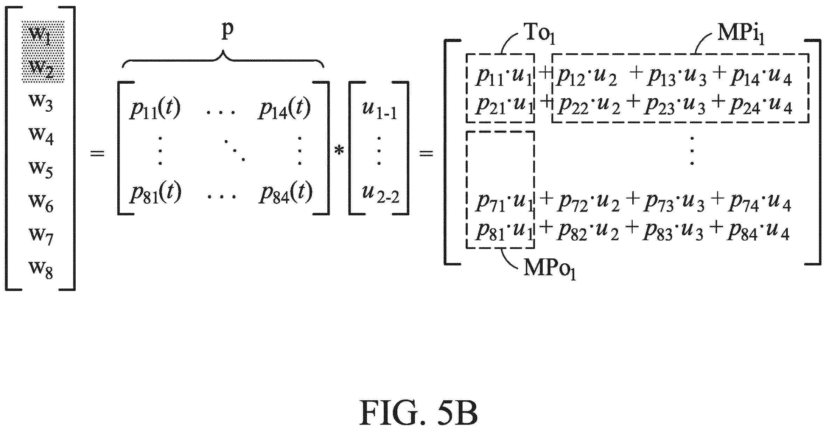

FIG. 5B is a schematic diagram of a process for the computations of the time-domain baseband signals w₁∼w₈ according to an embodiment of the disclosure. Taking FIG. 5A for example, after the channel coding data U1∼U4 are respectively processed by the precoders 541-1-541-4, the OFDM symbol constructors 561-1-561-4 and the IFFT circuits 571-1-571-4 to generate the data u₁∼u₄, the inner product computation is performed for the data U1∼U4 and a precoding matrix p to from the time-domain baseband signals w₁-w₈, wherein the *p*₁₁(t), *p*₁₂(t)···*p*_{MN}(t) of the precoding matrix are precoding parameters, M corresponds to the number of time-domain baseband signals w (e.g. w₁∼w₈) and N corresponds to the number of data u (e.g. u₁∼u₄) which is generated after the IFFT computation is performed for the channel coding data U₁∼U₄. In the embodiment of the disclosure, each of the RFNs 520-1-520-4 only needs to process the data related to a user which is assigned to it. Other required data related to other users can be processed by other RFNs and each of the RFNs 520-1-520-4 may obtain the required data related to other users from the second transmission ports MPi₁∼MPi₄. Taking FIG. 5A for example, the RFN 220-1 only needs to process the data related to the User 1 assigned to the RFN 220-1 to generate *p*ₘ₁·u₁, wherein m=1,2,···8. The third IFFT data *p*₁₁·u₁ and *p*₂₁·u₁ is one part of the time-domain baseband signals w₁ and w₂, and the third IFFT data *p*₁₁·u₁ and *p*₂₁·u₁ is output from the output-end To₁ of the IFFT circuit 571-1 to the combiner 551-1. Other data related to the channel coding data U₁ (i.e. the first IFFT data *p*ₘ₁·u₁, wherein m=3, 4···8) may be transmitted from the first transmission port MPo₁ to the switch 580 and then transmitted to other RFNs 520-2-520-4 by the switch 580. The second IFFT data *p*₁₂·u₂+*p*₁₃·u₃+*p*₁₄·u₄ which is the other part of the time-domain baseband signals w₁ and w₂ is generated by other RFNs 520-2-520-4 and transmitted to the switch 580. Then, the switch 280 may transmit the second IFFT data to the combiner 551-1 through second transmission port MPi₁. Therefore, the computations of the RFN 520-1 will be reduced.

According to the above embodiments for different structures of the multi-cell coordination system, we can know that the transmission ports configured in each of the baseband circuits of each RFN may configured in the output-end of the precoder, the output-end of the OFDM symbol constructor or the output-end of the IFFT circuit. The transmission ports of each RFN may comprise a first transmission port and a second transmission port, wherein the first transmission port is configured to transmit the second data to other RFNs and the second transmission port is configured to receive the third data provided by other RFNs.

FIG. 6 is a schematic diagram of a multi-cell coordination system 600 according to another embodiment of the disclosure. As shown in FIG. 6, the multi-cell coordination system 600 includes a BPN 610, a coordination server 611, a plurality of RFNs 620-1-620-4 and a switch 680. The baseband circuits 621-1-621-4 of the RFNs 620-1-620-4 may respectively comprise the channel coding circuits 631-1-631-4, precoders 641-1-641-4, combiners 651-1-651-4, OFDM symbol constructors 661-1-661-4 and IFFT circuits 671-1-671-4. Furthermore, in the embodiment, the transmission ports (the first transmission ports MPo₁∼MPo₄ and the second transmission ports MPi₁∼MPi₄) of the baseband circuits 621-1-621-4 are respectively configured between the precoders 641-1-641-4 and the combiners 651-1-651-4. In the embodiment, each of the RF circuits 622-1-622-4 of the RFNs 620-1-620-4 is electrically connected to two antennas (i.e. A1∼A8). Furthermore, in the embodiment, the switch 680 is configured in the BPN 610, but the disclosure is not limited thereto. In addition, in the embodiment, the operations of the channel coding circuits 631-1-631-4, precoders 641-1-641-4, combiners 651-1-651-4, OFDM symbol constructors 661-1-661-4 and IFFT circuits 671-1-671-4 are similar to the operations of the channel coding circuits 231-1-231-4, precoders 241-1-241-4, combiners 251-1∼251-4, OFDM symbol constructors 261-1-261-4 and IFFT circuits 271-1-271-4, thereby, the details will not be illustrated repeatedly herein.

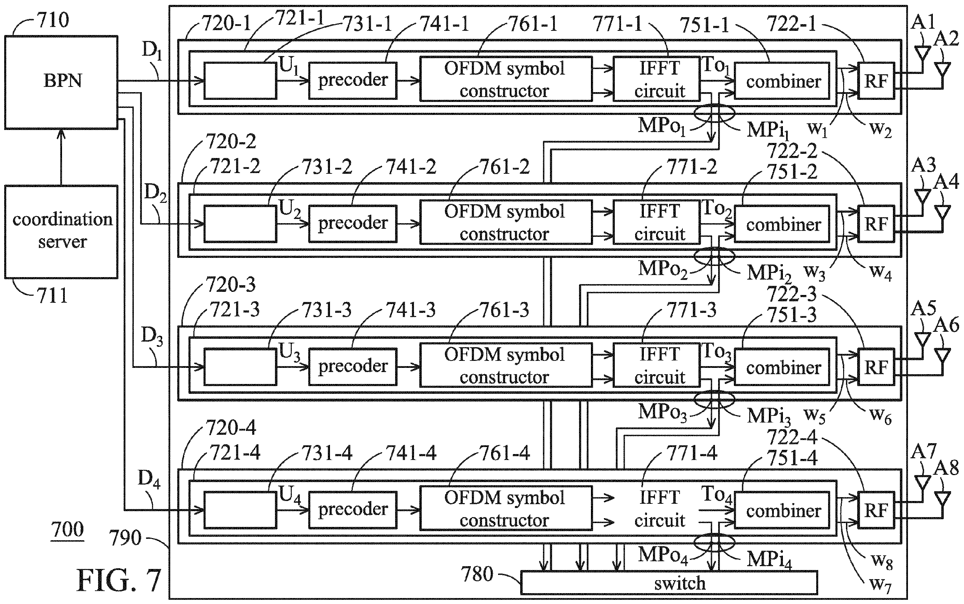

FIG. 7 is a schematic diagram of a multi-cell coordination system 700 according to another embodiment of the disclosure. As shown in FIG. 7, the multi-cell coordination system 700 includes a BPN 710, a coordination server 711, a plurality of RFNs 720-1∼720-4 and a switch 780. The baseband circuits 721-1-721-4 of the RFNs 720-1-720-4 may respectively comprise the channel coding circuits 731-1-731-4, precoders 741-1-741-4, combiners 751-1-751-4, OFDM symbol constructors 761-1-761-4 and IFFT circuits 771-1-771-4. Furthermore, in the embodiment, the transmission ports (the first transmission ports MPo₁∼MPo₄ and the second transmission ports MPi₁∼MPi₄) of the baseband circuits 721-1-721-4 are respectively configured between the IFFT circuits 771-1∼771-4 and the combiners 751-1-751-4. In the embodiment, each of the RF circuits 722-1-722-4 of the RFNs 720-1-720-4 is electrically connected to two antennas (i.e. A1∼A8). Furthermore, in the embodiment, the switch 780 is independently configured outside of the BPN 710 and the RFNs 720-1∼720-4.

As shown in FIG. 7, in the embodiment, the RFNs 720-1∼720-4 is integrated in a circuit board (or a device) 790, wherein the antennas A1∼A8 may be integrated in the circuit board 790, or electrically connected to the circuit board 790 from the remote end. In addition, in the embodiment, the operations of the channel coding circuits 731-1-731-4, precoders 741-1-741-4, combiners 751-1-751-4, OFDM symbol constructors 761-1-761-4 and IFFT circuits 771-1-771-4 are similar to the operations of the channel coding circuits 531-1-531-4, precoders 541-1-541-4, combiners 551-1-551-4, OFDM symbol constructors 561-1-561-4 and IFFT circuits 571-1-571-4, thereby, the details will not be illustrated repeatedly herein.

FIG. 8A is a schematic diagram of a multi-cell coordination system 800 according to another embodiment of the disclosure. As shown in FIG. 8A, the multi-cell coordination system 800 includes a BPN 810, a coordination server 811, a plurality of RFNs 820-1∼820-4 and a switch 880. The baseband circuits 821-1-821-4 of the RFNs 820-1-820-4 may respectively comprise the channel coding circuits 831-1-831-4, precoders 841-1-841-4, combiners 851-1-851-4, OFDM symbol constructors 861-1-861-4 and IFFT circuits 871-1-871-4. Furthermore, in the embodiment, the transmission ports (the first transmission ports MPo₁∼MPo₄ and the second transmission ports MPi₁∼MPi₄) of the baseband circuits 821-1-821-4 are respectively configured between the precoders 841-1-841-4 and the combiners 851-1-851-4. In the embodiment, each of the RF circuits 822-1-822-4 of the RFNs 820-1-820-4 is electrically connected to two antennas (i.e. A1∼A8). Furthermore, in the embodiment, the switch 880 is independently configured outside of the BPN 810 and the RFNs 820-1∼820-4. In addition, in the embodiment, the operations of the channel coding circuits 831-1-831-4, precoders 841-1-841-4, combiners 851-1-851-4, OFDM symbol constructors 861-1-861-4 and IFFT circuits 871-1-871-4 are similar to the operations of the channel coding circuits 231-1-231-4, precoders 241-1-241-4, combiners 251-1∼251-4, OFDM symbol constructors 261-1-261-4 and IFFT circuits 271-1-271-4, thereby, the details will not be illustrated repeatedly herein.

In addition, According to an embodiment of the disclosure, the transmission ports shown in FIG. 8A may also be configured in the output-ends of the OFDM symbol constructors 861-1-861-4 or the output-end of the IFFT circuits 871-1-871-4.

As shown in FIG. 8A, the coordination server 811 may respectively assign the data D₁₋₁ and D₁₋₂ of the User 1 to the RFN 820-1 and 820-2, and respectively assign the data D₂₋₁ and D₂₋₂ of the User 2 to the RFN 820-3 and 820-4. The data D₁₋₁ and D₁₋₂ of the User 1 and the data D₂₋₁ and D₂₋₂ of the User 2 may be respectively processed by the channel coding circuits 831-1-831-4 to generate the channel coding data U₁₋₁, U₁₂, U₂₋₁ and U₂₋₂. Therefore, according to the embodiment, when the quantity of data which a user needs to transmit is too large, the coordination server may assign more than one RFN to transmit the user's data.

FIG. 8B is a schematic diagram of a process for the computations of the precoding data W₁∼W₈ according to another embodiment of the disclosure. Taking FIG. 8A for example, after the channel coding data U₁₋₁, U₁₂, U₂₋₁ and U₂₋₂ are respectively transmitted to the precoders 241-1-241-4, the inner product computation is performed for the channel coding data U₁₋₁, U₁₂, U₂₋₁ and U₂₋₂ and a precoding matrix P to from the combined precoding data W₁∼W₈, wherein the *P*₁₁(t), *P*₁₂(t)···*P*_{MN}(t) of the precoding matrix are precoding parameters, M corresponds to the number of precoding data W (e.g. W₁∼W₈) and N corresponds to the number of channel coding data U (e.g. U₁₋₁, U₁₂, U₂₋₁ and U₂₋₂). In the embodiment of the disclosure, each of the RFNs 820-1-820-4 only needs to process the data related to the user which is assigned to it. Other required data related to other users can be processed by other RFNs and each of the RFNs 820-1∼820-4 may obtain the required data related to other users from the second transmission ports MPi₁∼MPi₄. Taking FIG. 8A for example, the RFN 820-1 only needs to process the channel coding data U₁₋₁ related to User 1 to generate *P*ₘ₁·U₁₋₁, wherein m=1,2,···8. The third precoding data *P*₁₁·U₁₋₁ and *P*₂₁·U₁₋₁ are one part of the precoding data W₁ and W₂, and the third precoding data P₁₁·U₁₋₁ and *P*₂₁·U₁₋₁ are output from the output-end Po₁ of the precoder 841-1 to the combiner 851-1. Other data related to the channel coding data U₁₋₁ (i.e. the first precoding data *P*ₘ₁·U₁₋₁, wherein m=3, 4···8) may be transmitted from the first transmission port MPo₁ to the switch 880 and then transmitted to other RFNs 820-2-820-4 by the switch 880. The second precoding data *P*₁₂-U₁₋₂+*P*₁₃·U₂₋₁+*P*₁₄·U₂₋₂ which are the other part of the precoding data W₁ and W₂ is generated by other RFNs 820-2-820-4 and transmitted to the switch 880. Then, the switch 880 may transmit the second precoding data to the combiner 851-1 through second transmission port MPi₁. Therefore, the computations of the RFN 820-1 will be reduced.

FIG. 9 is a schematic diagram of a multi-cell coordination system 900 according to another embodiment of the disclosure. As shown in FIG. 9, the multi-cell coordination system 900 includes a BPN 910, a coordination server 911, a plurality of RFNs 920-1-920-4 and a switch 980. The baseband circuits 921-1-921-4 of the RFNs 920-1-920-4 may respectively comprise the channel coding circuits 931-1-931-4, precoders 941-1-941-4, combiners 951-1-951-4, OFDM symbol constructors 961-1-961-4 and IFFT circuits 971-1-971-4. Furthermore, in the embodiment, the transmission ports (the first transmission ports MPo₁∼MPo₄ and the second transmission ports MPi₁∼MPi₄) of the baseband circuits 921-1-921-4 are respectively configured between the precoders 941-1-941-4 and the combiners 951-1-951-4. In the embodiment, each of the RF circuits 922-1-922-4 of the RFNs 920-1-920-4 is electrically connected to two antennas (i.e. A1∼A8). Furthermore, in the embodiment, the switch 880 is independently configured outside of the BPN 910 and the RFNs 920-1∼920-4. In addition, in the embodiment, the operations of the channel coding circuits 931-1-931-4, precoders 941-1-941-4, combiners 951-1-951-4, OFDM symbol constructors 961-1-961-4 and IFFT circuits 971-1-971-4 are similar to the operations of the channel coding circuits 231-1-231-4, precoders 241-1-241-4, combiners 251-1∼251-4, OFDM symbol constructors 261-1-261-4 and IFFT circuits 271-1-271-4, thereby, the details will not be illustrated repeatedly herein.

In addition, According to an embodiment of the disclosure, the transmission ports shown in FIG. 9 may also be configured in the output-ends of the OFDM symbol constructors 961-1-961-4 or the output-end of the IFFT circuits 971-1-971-4.

As shown in FIG. 9, when the data of 8 users need to be transmitted, the coordination server 911 may assign the data D₁ and D₂ of the User 1 and the User 2 to the RFN 920-1, assign the data D₃ and D₄ of the User 3 and the User 4 to the RFN 920-2, assign the data D₅ and D₆ of the User 5 and the User 6 to the RFN 920-3, and assign the data D₇ and D₈ of the User 7 and the User 8 to the RFN 920-4. The data D₁ and D₂ of the User 1 and the User 2 may be processed by the channel coding circuit 931-1 to generate the channel coding data U₁₂ (comprising channel coding data U₁ and U₂), the data D₃ and D₄ of the User 3 and the User 4 may be processed by the channel coding circuit 931-2 to generate the channel coding data U₃₄ (comprising channel coding data U₃ and U₄), the data D₅ and D₆ of the User 5 and the User 6 may be processed by the channel coding circuit 931-3 to generate the channel coding data U₅₆ (comprising channel coding data U₅ and U₆), and the data D₇ and D₈ of the User 7 and the User 8 may be processed by the channel coding circuit 931-4 to generate the channel coding data U₇₈ (comprising channel coding data U₇ and U₈). Therefore, in the embodiment, when there are more users than there are RFNs, the coordination server may assign more than one user's data to an RFN to transmit the users' data.

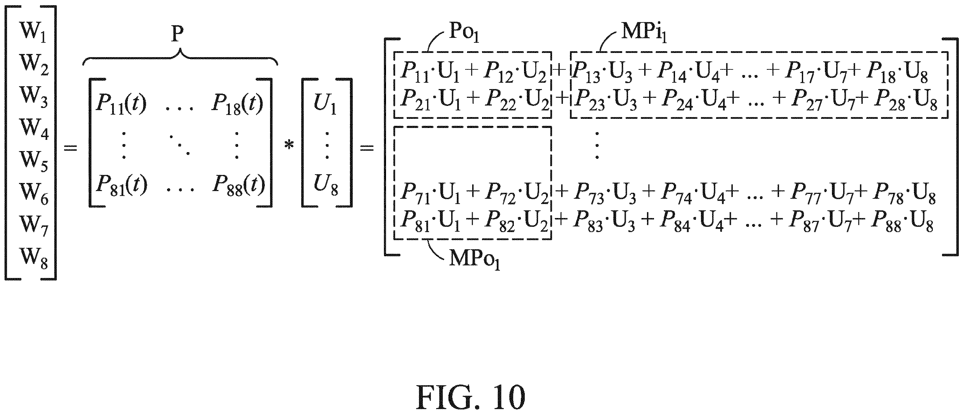

FIG. 10 is a schematic diagram of a process for the computations of the precoding data W₁∼W₈ according to another embodiment of the disclosure. Taking FIG. 9 for example, after the channel coding data U₁₂, U₃₄, U₅₆ and U₇₈ are respectively transmitted to the precoders 941-1-941-4, the inner product computation is performed for the channel coding data U₁₂, U₃₄, U₅₆ and U₇₈ and a precoding matrix P to from the combined precoding data W₁∼W₈, wherein the *P*₁₁(t), *P*₁₂(t)···*P*_{MN}(t) of the precoding matrix are precoding parameters, M corresponds to the number of precoding data W (e.g. W₁∼W₈, M=8) and N corresponds to the number of channel coding data U (e.g. U₁∼U₈, N=8). In the embodiment of the disclosure, each of the RFNs 920-1∼920-4 only needs to process the data related to the user which is assigned to it. Other required data related to other users can be processed by other RFNs and each of the RFNs 920-1∼920-4 may obtain the required data related to other users from the second transmission ports MPi₁∼MPi₄. Taking FIG. 9 for example, the RFN 920-1 only needs to process the channel coding data U₁₂ related to the User 1 and User 2 to generate *P*ₘ₁·U₁+ *P*ₘ₂·U₂, wherein m=1,2,···8. The third precoding data *P*₁₁·U₁+ *P*₁₂·U₂ and *P*₂₁·U₁+ *P*₂₂·U₂ is one part of the precoding data W₁ and W₂, and the third precoding data *P*₁₁·U₁+ *P*₁₂·U₂ and *P*₂₁·U₁+ *P*₂₂·U₂ are output from the output-end Po₁ of the precoder 941-1 to the combiner 951-1. Other data related to the channel coding data U₁₂ (i.e. the first precoding data *P*ₘ₁·U₁+ *P*ₘ₂·U₂, wherein m=3, 4···8) may be transmitted from the first transmission port MPo₁ to the switch 980 and then transmitted to other RFNs 920-2-920-4 by the switch 980. The second precoding data *P*₁₃·U₃+*P*₁₄·U₄+···+ *P*₁₇·U₇+*P*₁₈·U₈ and *P*₂₃·U₃+*P*₂₄·U₄+···+ *P*₂₇·U₇+P₂₈·U₈ which are the other parts of the precoding data W₁ and W₂ is generated by other RFNs 920-2-920-4 and transmitted to the switch 980. Then, the switch 980 may transmit the second precoding data to the combiner 951-1 through second transmission port MPi₁. Therefore, the computations of the RFN 920-1 will be reduced.

According to an embodiment of the disclosure, each of the channel coding circuits of the disclosure may comprise a encoder, a scrambler, a QAM mapper circuit, a layer mapper circuit, MIMO encoder, but the disclosure is not limited thereto.

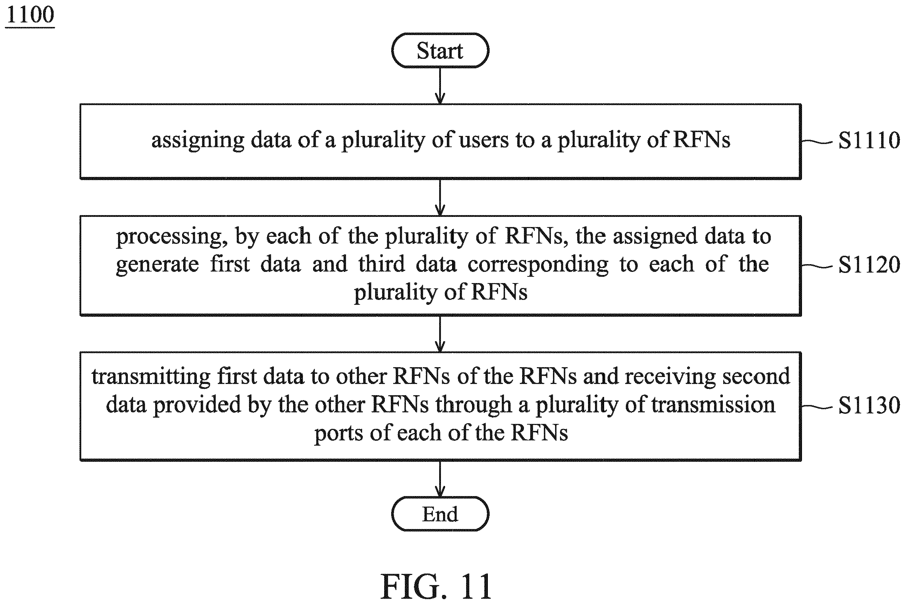

FIG. 11 is a flowchart 1100 illustrating a multi-cell coordination method according to an embodiment of the disclosure. The multi-cell coordination method can be applied to the multi-cell coordination system of the disclosure.

In step S1110, the data of a plurality of users are assigned to a plurality of RFNs by a coordination server. In step S1120, each of the RFNs may process the assigned data to generate a first data and a third data corresponding to each of the RFNs. In step S1130, a plurality of transmission ports of each RFN may be configured to transmit the first data which other RFNs need and receive a second data which is provided by other RFNs. In some embodiments of the disclosure, the transmission ports comprise a first transmission port and a second transmission port.

According to an embodiment of the disclosure, in step S1130 further comprises that each of the RFNs may transmit the first data which other RFNs need from its first transmission port to a switch, and receive the second data which is provided by other RFNs through its second transmission port, wherein the second data provided by other RFNs is transmitted from the switch to the second transmission port.

In another embodiment of the disclosure, in step S1130 further comprises that each of the RFNs may directly transmit the first data which other RFNs need to other RFNs through its first transmission port, and directly receive the second data which is provided by other RFNs through its second transmission port.

In some embodiments of the disclosure, the multi-cell coordination method comprises the step of combining the third data output by the precoder or the OFDM symbol constructor of the RFN with the second data provided by other RFNs in the frequency domain. In some embodiments of the disclosure, the multi-cell coordination method comprises the step of combining the third data output by the IFFT circuit of the RFN with the second data provided by other RFNs in the time domain.

In some embodiments of the disclosure, the multi-cell coordination method comprises the step of respectively assigning the data of a plurality of users to each of the RFNs. In some embodiments of the disclosure, the multi-cell coordination method comprises the step of assigning the data of one of the users to more than one RFN. In some embodiments of the disclosure, the multi-cell coordination method comprises the step of assigning the data of more than one user to one RFN.

According to the multi-cell coordination system and method provided in the disclosure, the transmission ports may be configured in each of the RFNs of the multi-cell coordination system. Therefore, each of the RFNs only needs to process the data related to a user which is assigned to it. Other required data related to other users can be processed by other RFNs and each of the RFNs may obtain the required data related to other users from the second transmission port to perform a joint (MU-MIMO) transmission of multi-cells. That is to say, each of the RFNs will not calculate the data of all users. Therefore, in the multi-cell coordination system and the method provided in the disclosure, the computations for performing the MU-MIMO transmission in each RFN of the multi-cell coordination system will be reduced.

Use of ordinal terms such as "first", "second", "third", etc., in the disclosure and claims is for description. It does not by itself connote any order or relationship.

The method and algorithm disclosed herein may be executed directly by at least one processor which is configured to the call processing device to apply in hardware, in a software module or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such that the processor could read information (e.g., code) from the storage medium and write information to the storage medium. A sample storage medium may be integral to the processor. The processor and the storage medium may reside in an ASIC. The ASIC may reside in user equipment. Alternatively, the processor and the storage medium may reside as discrete components in user equipment. Moreover, in some embodiments any suitable computer-program product may include a computer-readable medium comprising codes relating to one or more of the embodiments of the disclosure. In some embodiments a computer program product may include packaging materials.

The above paragraphs describe many aspects. Accordingly, the teaching of the disclosure may be accomplished by many methods, and any configurations or functions in the disclosed embodiments only present a representative condition. Those who are skilled in this technology will understand that all of the disclosed aspects in the disclosure may be applied independently or be incorporated.

While the disclosure has been described by way of example and as exemplary embodiments only, it should be understood that the disclosure is not configured to limit thereto. Those who are skilled in this technology can still make various alterations and modifications without departing from the scope and spirit of this disclosure. Therefore, the scope of the invention shall be defined and protected by the following claims and their equivalents.

## Claims

1. A multi-cell coordination system (100), comprising:
a plurality of radio frequency nodes (RFNs) (120-1∼120-4), wherein each of the RFNs (120-1, ..., or, 120-4) comprises:
a baseband circuit (121-1, ..., or, 121-4);
a radio frequency (RF) circuit (122-1, ..., or 122-4), electrically connected to the baseband circuit; and
a plurality of transmission ports ((MPo₁ and MPi₁), ..., or (MPo₄ and MPi₄)), configured in the RF circuit and configured to transmit data to other RFNs of the plurality of RFNs and receive data provided by the other RFNs of the plurality of RFNs; and
a baseband processing node (BPN) (110), centralizing and performing layer 2 and layer 3 functions of each cell.

2. The multi-cell coordination system of claim 1, further comprising:
a coordination server (111, 211, 411, 511, 611, 711, 811 or 911), electrically connected to the BPN to assign data of a plurality of users (D₁∼D₄, D₁₋₁∼D₂₋₂, or D₁∼D8) to the plurality of RFNs.

3. The multi-cell coordination system of claim 2, wherein the baseband circuit (221, 421, 541, 621, 721, 821 or 921) further comprises:
a precoder (241, 441, 541, 641, 741, 841 or 941);
an OFDM symbol constructor (261, 461, 561, 661, 761, 861 or 961);
a combiner (251, 451, 551, 651, 751, 851 or 951); and
an IFFT circuit (271, 471, 571, 671, 771, 871 or 971),
wherein the plurality of transmission ports of each of the plurality of RFNs are configured in an output-end of the precoder, an output-end of the OFDM symbol constructor, or an output-end of the IFFT circuit.

4. The multi-cell coordination system of claim 3, wherein the plurality of transmission ports comprise a first transmission port (MPo₁, ..., or MPo₄) and a second transmission port (MPi₁, ..., or MPi₄), wherein the first transmission port transmits a first data to the other RFNs and the second transmission port receives a second data provided by the other RFNs.

5. The multi-cell coordination system of claim 4, further comprising:
a switch (280, 580, 680, 780, 880 or 980), wherein each of the plurality of RFNs transmits the first data from the first transmission port (MPo₁, ..., or MPo₄) to the switch to provide the first data to the other RFNs, and each of the plurality of RFNs receives the second data provided by the other RFNs through the second transmission port (MPi₁, ..., or MPi₄), wherein the second data provided by the other RFNs is transmitted from the switch to the second transmission port.

6. The multi-cell coordination system of claim 5, wherein the switch is independently configured outside of the plurality of RFNs and the BPN or configured in one of the plurality of RFNs or the BPN.

7. The multi-cell coordination system of claim 4, wherein each of the plurality of RFNs directly transmits the first data to the other RFNs through the first transmission port (MPo₁, ..., or MPo₄), and each of the plurality of RFNs directly receives the second data provided by the other RFNs through the second transmission port (MPi₁, ..., or MPi₄).

8. The multi-cell coordination system of claim 4, wherein the combiner combines a third data output by the precoder or the OFDM symbol constructor (Poₙ or Coₙ, n=1∼4) with the second data provided by the other RFNs in a frequency domain.

9. The multi-cell coordination system of claim 4, wherein the combiner combines a third data output by the IFFT circuit (To₁, ..., or To₄) with the second data provided by the other RFNs in a time domain.

10. The multi-cell coordination system of claim 1, wherein the plurality of RFNs is integrated in a circuit board (790).

11. The multi-cell coordination system of claim 2, wherein the coordination server respectively assigns the data of the users (D₁∼D₄) to each of the plurality of RFNs.

12. The multi-cell coordination system of claim 2, wherein the coordination server assigns the data of one of the users (D₁₋₁∼D₁₋₂, or D₂₋₁~D₂₋₂) to more than one RFN of the plurality of RFNs.

13. The multi-cell coordination system of claim 2, wherein the coordination server assigns the data of more than one of the users ((D₁, D₂), ..., (D₇∼D₈₎) to one of the plurality of RFNs.

14. A multi-cell coordination method, comprising:
assigning data of a plurality of users (D₁∼D₄, D₁₋₁∼D₂₋₂, or D₁∼D8) to a plurality of radio frequency nodes (RFNs) (120-n, 220-n, 420-n, 520-n, 620-n, 720-n, 820-n, or 920-n, n=1∼4);
processing, by each of the plurality of RFNs, the assigned data to generate a first data and a third data corresponding to each of the plurality of RFNs; and
transmitting the first data to other RFNs of the plurality of RFNs and receiving a second data provided by the other RFNs through a plurality of transmission ports of each of the plurality of RFNs ((MPo₁ and MPi₁), ..., or (MPo₄ and MPi₄)).

15. The multi-cell coordination method of claim 14, further comprising:
transmitting, by each of the plurality of RFNs, the first data from a first transmission port (MPo₁, ..., or MPo₄) to a switch (280, 580, 680, 780, 880 or 980) to provide the first data to the other RFNs; and
receiving, by each of the plurality of RFNs, the second data provided by the other RFNs through a second transmission port (MPi₁, ..., or MPi₄), wherein the second data provided by the other RFNs is transmitted from the switch to the second transmission port,
wherein the plurality of transmission ports comprise the first transmission port and the second transmission port.

16. The multi-cell coordination method of claim 14, further comprising:
directly transmitting, by each of the plurality of RFNs, the first data to the other RFNs through a first transmission port (MPo₁, ..., or MPo₄); and
directly receiving, by each of the plurality of RFNs, the second data provided by the other RFNs through a second transmission port (MPi₁, ..., or MPi₄),
wherein the plurality of transmission ports comprise the first transmission port and the second transmission port.

17. The multi-cell coordination method of claim 14, further comprising:
combining the third data (Poₙ or Coₙ, n=1∼4) output by a precoder or an OFDM symbol constructor of each of the plurality of RFNs with the second data provided by the other RFNs in a frequency domain.

18. The multi-cell coordination method of claim 14, further comprising:
combining the third data (To₁, ..., or To₄) output by a IFFT circuit of each of the plurality of RFNs with the second data provided by the other RFNs in a time domain.

19. The multi-cell coordination method of claim 14, further comprising:
respectively assigning the data of the users (D₁∼D₄) to each of the plurality of RFNs.

20. The multi-cell coordination method of claim 14, further comprising:
assigning the data of one of the users (D₁₋₁∼D₁₋₂, or D₂₋₁∼D₂₋₂) to more than one RFN of the plurality of RFNs.

21. The multi-cell coordination method of claim 14, further comprising:
assigning the data of more than one of the users ((D₁, D₂), ..., (D₇∼D₈₎) to one of the plurality of RFNs.
